# EUROPÄISCHE PATENTSCHRIFT

(11) **EP 1 287 312 B1**
(45) Veröffentlichungstag und Bekanntmachung des Hinweises auf die Patenterteilung: **08.06.2005**
(21) Anmeldenummer: 01929368.7
(22) Anmeldetag: 28.02.2001
(51) Int. Cl.: G01C 3/00, G02B 27/09

(54) **OPTISCHER ENTFERNUNGSMESSER**
OPTICAL TELEMETER
TELEMETRE OPTIQUE

(30) Priorität: 26.04.2000 EP 00108836
(43) Veröffentlichungstag der Anmeldung: 05.03.2003
(73) Patentinhaber: Leica Geosystems AG, 9435 Heerbrugg (CH)
(72) Erfinder: GÄCHTER, Bernhard, CH-9436 Balgach (CH); SCHILLING, Andreas, CH-6300 Zug (CH); STAUFFER, Laurent, CH-9443 Widnau (CH); VOKINGER, Urs, CH-9434 Au (CH)
(74) Vertreter: Kaminski, Susanne, Dr.
(86) Internationale Anmeldenummer: PCT/EP2001/002204
(87) Internationale Veröffentlichungsnummer: WO 2001/084077

(56) Entgegenhaltungen:
- EP-A- 0 257 292
- WO-A-95/15510
- DE-A- 4 316 348
- DE-A- 19 544 488
- DE-A- 19 645 150
- DE-A- 19 800 590
- DE-C- 19 500 513
- US-A- 5 636 069
- US-A- 6 044 096

## Beschreibung

### Technisches Gebiet

Die Erfindung betrifft einen optischen Entfernungsmesser, wie sie z. B. bei Vermessungen von Grundstücken und Bauten eingesetzt werden.

### Stand der Technik

Gattungsgemässe optische Entfernungsmesser sind seit längerem bekannt. Die als Lichtquellen eingesetzten Laserdioden haben jedoch den Nachteil, dass der an der Emissionskante austretende Lichtstrahl einen sehr langen und schmalen Querschnitt aufweist. Dies führt zu schlechter Zielausleuchtung, da nur ein Teil des Lichtstrahls auf das Ziel fällt und beeinträchtigt damit die Reichweite und die Messgenauigkeit. Dazu kann die Messung auch durch Reflexion von das Ziel verfehlenden Teilen des Strahles an anderen, z. B. weiter entfernten Objekten empfindlich gestört werden.

In der DE 43 16 348 A1 wird beispielhaft ein optischer Entfernungsmesser beschrieben, bei dem ein von einem Halbleiterlaser erzeugtes Messstrahlenbündel mit einem einfachen Kollimator kollimiert wird. Die Abstrahlcharakteristik eines Halbleiterlasers ist in den beiden Richtungen senkrecht und parallel zur Emissionskante sehr unterschiedlich, so dass der Kollimator nur in einem schmalen Streifen ausgeleuchtet wird. Da der Entfernungsmesser für einen Bereich von deutlich unter 100 m vorgesehen ist, können die mit dieser Strahlcharakteristik einhergehenden Einschränkungen in Kauf genommen werden.

Die DE 195 44 488 A1 zeigt eine optische Anordnung für die Kollimation der Laserstrahlen mehrer in einer Reihe angeordneter Emitter oder Emittergruppen.

Aus der DE 198 00 590 A1 ist eine Lösung zur Symmetrisierung der Strahlung eines oder mehrerer übereinander angeordneter Hochleistungsdiodenlaser bekannt. Hierbei erfolgt eine Versetzung von Teilstrahlenbündeln, die aufgrund der Beabstandung der Emitter bereits bei ihrer Erzeugung separiert sind.

DE 196 45 150 A1 zeigt eine optische Anordnung zur Symmetrisierung der Strahlung einer Mehrzahl von in fester Zuordnung nebeneinander angeordneter, separater Laserdioden.

Aus der US 6,044,096 ist die Einkopplung der Strahlung einer Mehrzahl von Laserdioden in eine Faser bekannt, bei der durch eine Kombination von Zylinderlinsen bzw. Zylinderlinsenarray, Umlenkprismen und Fokussierlinse eine Strahlformung der Emission separierter Laserdioden erfolgt.

Die im Stand der Technik bekannten Lösungen zur Strahlformung betreffen die Zusammenführung der Emission verschiedener getrennter Emitter oder Emittergruppen in einen Punkt durch eine Abfolge von separaten optischen Komponenten.

### Darstellung der Erfindung

Der Erfindung liegt die Aufgabe zu Grunde, einen gattungsgemässen optischen Entfernungsmesser anzugeben, mit dem eine bessere Zielausleuchtung erzielt wird als bei bekannten gattungsgemässen Entfernungsmessern.

Die durch die Erfindung erzielten Vorteile liegen vor allem in einer entscheidenden Verbesserung der Reichweite, d. h. der maximalen Messdistanz oder, bei gegebener Reichweite, einer Erhöhung der Messgenauigkeit.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1a: schematisch eine Seitenansicht eines Senders eines erfindungsgemässen Entfernungsmessers,
- Fig. 1b: schematisch eine Draufsicht auf den Sender gemäss Fig. 1a,
- Fig. 2: eine Draufsicht in Strahlrichtung auf ein erstes Umlenkelement des Senders gemäss Fig. 1a,b,
- Fig. 3: eine Draufsicht entgegen der Strahlrichtung auf ein zweites Umlenkelement des Senders gemäss Fig. 1a,b und
- Fig. 4: die Zielausleuchtung durch den Sender gemäss Fig. 1a,b.

### Wege zur Ausführung der Erfindung

Ein erfindungsgemässer optischer Entfernungsmesser weist einen Sender auf sowie einen Empfänger, welcher z. B. in bekannter Weise mit einer Optik und avalanche-Photodioden aufgebaut sein kann sowie eine elektronische Steuer- und Auswerteeinheit ebenfalls bekannter Ausbildung, welche die Aussendung von Lichtimpulsen durch den Sender steuert und das Ausgangssignal des Empfängers auswertet. Die Entfernungsmessung kann durch Laufzeitmessung oder nach dem Phasenvergleichsverfahren erfolgen.

Der Sender weist einen Kollimator 1 auf und eine demselben vorgeordnete Lichtquelle 2, die sich aus einer Laserdiode 3 und einer Strahlformungsoptik 4 zusammensetzt. Die Laserdiode 3 ist ein Kantenemitter, der elektromagnetische Wellen im Infrarotbereich, vorzugsweise mit einer zwischen 850 nm und 980 nm liegenden Wellenlänge oder einer Wellenlänge λ = 1.550 nm aussendet. Die Emissionskante weist eine Länge von zwischen 30 µm und 800 µm auf, während ihre Breite zwischen 1 µm und 3 µm liegt. Die Emissionskante kann in Längsrichtung auch unterbrochen sein. Beispielsweise kann statt der einen Laserdiode 3 eine lineare Anordnung von Laserdioden mit Kantenlängen von z. B. 50 µm und Abständen zwischen aufeinanderfolgenden Kanten von 100 µm vorgesehen sein. Die numerische Apertur, welche dem Sinus des halben Oeffnungswinkels entspricht, liegt parallel zur Emissionskante bei 0,1, quer zu derselben bei 0,6 bis 0,7. Das Produkt beider Grössen, bekannt als SBP (space bandwidth product) ist quer zur Emissionskante ungefähr gleich der Wellenlänge und damit praktisch monomodal (transversale Mode 0), d. h. es liegt in der Nähe eines grundsätzlichen, nicht überschreitbaren Grenzwerts, während es parallel zur Emissionskante um einen Faktor 10 bis 100 grösser ist als dieser Grenzwert. Auch in dieser Richtung ist das SBP zwar durch konventionelle lichtbrechende Elemente wie Linsen nicht veränderbar, doch kann es mittels auf Lichtbeugung oder -brechung beruhender Elemente sehr nahe an der Emissionskante durch Umlagerung parallel zu derselben verringert und dafür quer dazu vergrössert und der Lichtstrahl dadurch stärker konzentriert werden.

Diesem Zweck dient die Strahlformungsoptik 4, die einen quaderförmigen Block 5 aus einem transparenten Material, vorzugsweise Glas umfasst, mit einer ersten Stirnfläche, die der Laserdiode 3 zugewandt ist und einer entgegengesetzten zweiten Stirnfläche, die dem Kollimator 1 zugewandt ist. Die erste Stirnfläche trägt eine Halterung 6 aus Kunststoff, welche eine Zylinderlinse 7 an ihren Endbereichen festhält. Die Zylinderlinse 7 weist runden Querschnitt auf, ihr Durchmesser beträgt ca. 60 µm. Sie ist parallel zur Emissionskante der Laserdiode 3 ausgerichtet und von derselben um ca. 10 µm beabstandet. Sie parallelisiert den von der Emissionskante ausgehenden Lichtstrahl, der bei Laserdioden der verwendeten Art quer einen grossen Abstrahlwinkel von ca. 80° aufweist. Der Durchmesser der Zylinderlinse und ihr Abstand von der Emissionskante können auch wesentlich grösser sein als angegeben, doch ist bei kleinen Werten, insbesondere von höchstens 65 µm bzw. höchsten 15 µm die Ueberlappung der von den aufeinanderfolgenden Bereichen der Kante kohärent abgestrahlten Anteile sehr gering, was auch die durch die Ueberlappung verursachten Verluste niedrig hält.

Der Zylinderlinse 7 nachgeordnet ist ein mit der Halterung 6 einstückiges erstes Umlenkelement 8, welches eine im wesentlichen ebene zur ersten Stirnfläche des Blocks 5 parallele strukturierte Oberfläche bildet. Sie zerfällt parallel zur Emissionskante in drei aufeinanderfolgende Felder 9a,b,c, welche unterschiedliche treppenartige Beugungsstrukuren tragen. Die entgegengesetzte zweite Stirnfläche des Blocks 5 trägt ein zweites Umlenkelement 10 aus Kunststoff, welches eine im wesentlichen ebene zur zweiten Stirnfläche parallele strukturierte Oberfläche aufweist, die in drei quer zur Emissionskante aufeinanderfolgende Felder 11a,b,c zerfällt, welche ebenfalls unterschiedliche treppenartige Beugungsstrukturen tragen.

Das obere Feld 9a des ersten Umlenkelements 8 ist so strukturiert, dass es den von einem oberen Abschnitt der Emissionskante ausgehenden Teilstrahl, von dem es getroffen wird, auf das in Strahlrichtung gesehen linke Feld 11a des zweiten Umlenkelements 10 lenkt, wo der Strahl geringfügig abgelenkt wird, so dass er auf den Kollimator 1 fällt und etwa das linke Drittel der Apertur desselben füllt. In genau entsprechender Weise lenkt das untere Feld 9c des ersten Umlenkelements 8 den von einem unteren Abschnitt der Emissionskante ausgehenden Teilstrahl, von dem es getroffen wird, auf das in Strahlrichtung gesehen rechte Feld 11c des zweiten Umlenkelements 10, wo es ebenfalls genau entsprechend abgelenkt wird und im weiteren etwa das rechte Drittel der Apertur des Kollimators 1 füllt. Das mittlere Drittel desselben wird von dem von einem etwas kürzeren mittleren Abschnitt der Emissionskante ausgehenden Teilstrahl ausgefüllt, der unabgelenkt durch die unstrukturierten mittleren Felder 9b und 11b des ersten Umlenkelements 8 bzw. des zweiten Umlenkelements 10 geht.

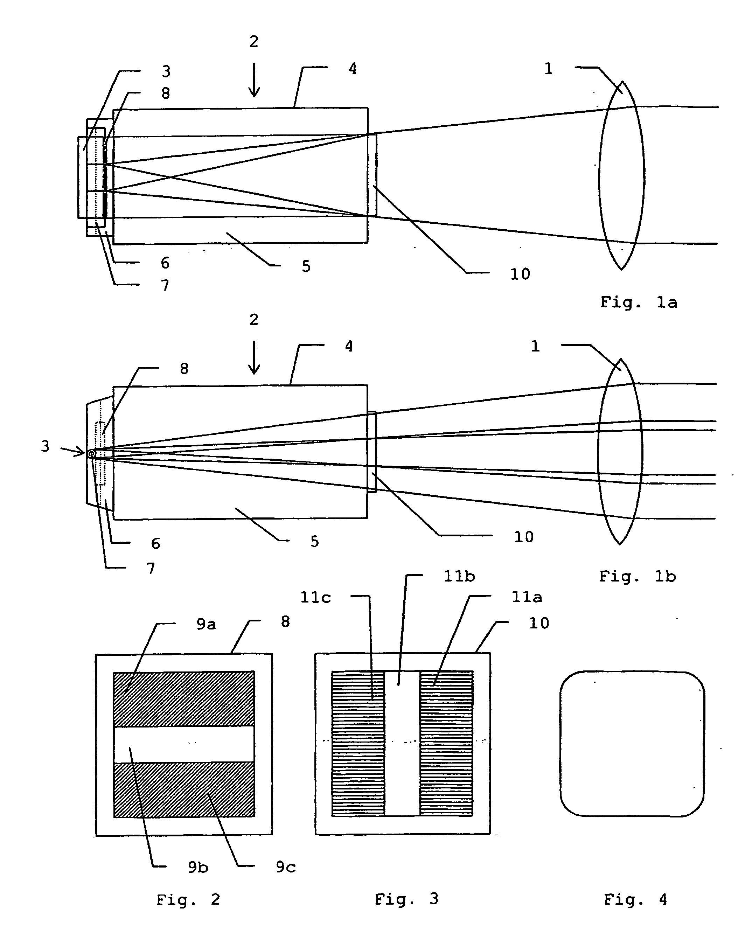

Die drei Teilstrahlen werden also vom ersten Umlenkelement 8 derart unterschiedlich abgelenkt, dass sie quer zur Emissionskante gesehen nebeneinander auf das zweite Umlenkelement 10 fallen, mithin ihre Projektionen auf eine von der Richtung der Emissionskante und der Strahlrichtung aufgespannte Ebene im wesentlichen zusammenfallen. Vom zweiten Umlenkelement 10 werden sie dann derart unterschiedlich abgelenkt, dass sie so auf den Kollimator 1 treffen, als ob sie jeweils von einer zur Emissionskante parallelen Linie in der Brennebene des Kollimators 1 ausgingen oder, anders ausgedrückt, so, dass ihre rückwärtige Extrapolation jeweils zu einer solchen Linie führt und jeder Teilstrahl etwa ein Drittel der Apertur des Kollimators 1 ausfüllt. Die drei aufeinanderfolgenden Abschnitte der Emissionskante werden auf ein nahezu quadratisches Feld abgebildet, und zwar derart, dass sie sich im Fernfeld überlagern (Fig. 4). Dies stellt eine ausgezeichnete Zielausleuchtung sicher.

Bei Wellenlängen zwischen 850 nm und 980 nm kann der Strahl sehr eng gebündelt werden, was eine Distanzrasterung mit hoher lateraler Auflösung gestattet. Sehr vorteilhaft sind auch Wellenlängen um 1.550 nm, weil dann die im Hinblick auf die Augensicherheit gegebene Obergrenze der zulässigen Einzelpulsenergie mit ca. 8 mJ um einen Faktor von ca. 16.000 höher liegt als bei Wellenlängen zwischen 630 nm und 980 nm. Die wenigstens teilweise Ausnützung dieses Faktors, die erfindungsgemäss dank der besseren Konzentration des Strahls möglich ist, gestattet eine sehr wesentliche Steigerung der Reichweite oder - bei gegebener Reichweite - der Empfindlichkeit.

Die Halterung 6 und das mit ihr einstückige erste Umlenkelement 8 sowie das zweite Umlenkelement 10 werden jeweils in einer der Replica-Techniken hergestellt, wie sie in M. T. Gale: 'Replication' in H. P. Herzig (ed.): 'Micro-Optics', Taylor & Francis 1997, S. 153-177 beschrieben sind - z. B. Aetzen einer Rolle oder eines Stempels aus Quarz und Heissprägen, Spritzgiessen oder Giessen mit anschliessender UV-Härtung - und mit dem Block 5 verklebt. Die Bestimmung der Beugungsstrukturen kann mit bekannten Computerprogrammen erfolgen. Das Replica-Verfahren erlaubt eine kostengünstige Herstellung hoher Stückzahlen. Dass auch die Halterung 6 in dieser Technik hergestellt wird, gestattet eine sehr präzise Positionierung der Zylinderlinse 7. Die Abstandstoleranz derselben bezüglich des ersten Umlenkelements 8 beträgt wenige µm. Mit Löttechnik und aktiver Justage, wie sie in DE-A-197 51 352 beschrieben sind, kann weiter die Laserdiode 3 so mit der Strahlformungsoptik 4 verbunden werden, dass die Montagetoleranz zwischen derselben und der Zylinderlinse 7 etwa 0,5 µm beträgt.

Es sind verschiedene Abwandlungen der beschriebenen Ausführung möglich. So kann etwa die Zylinderlinse mit Kitt direkt an der Laserdiode befestigt sein. Das erste Umlenkelement und das zweite Umlenkelement können auch aus Glas bestehen und etwa durch ein Aetzverfahren hergestellt sein. Sie können auch direkt in den sie trennenden Block eingeätzt sein. Die Zahl der Felder der Umlenkelemente kann statt drei auch zwei, vier oder mehr betragen. Die Strahlformungsoptik kann auch aus lichtbrechenden Elementen, z. B. Prismen und Platten bestehen. Schliesslich können auch Laserdioden mit Wellenlängen vor allem zwischen 600 nm und 1.000 nm und insbesondere zwischen 630 nm und 980 nm eingesetzt werden, die ausserhalb der oben angegebenen Bereiche liegen.

### Bezugszeichenliste

- 1: Kollimator
- 2: Lichtquelle
- 3: Laserdiode
- 4: Strahlformungsoptik
- 5: Block
- 6: Halterung
- 7: Zylinderlinse
- 8: erstes Umlenkelement
- 9a,b,c: Felder
- 10: zweites Umlenkelement
- 11a,b,c: Felder

## Patentansprüche

1. Optischer Entfernungsmesser mit wenigstens einer Lichtquelle (2) zur Zielausleuchtung und einem Kollimator (1), der vom Entfernungsmesser zu emittierende Strahlung vor der Zielausleuchtung kollimiert, wobei die Lichtquelle dem Kollimator (1) vorgeordnet ist und eine Laserdiode (3) mit einer Emissionskante sowie einen Empfänger und eine Steuerungs- und Auswerteeinheit aufweist, **dadurch gekennzeichnet, dass** die Lichtquelle (2) eine der Laserdiode (3) nachgeordnete, den Kollimator (1) zumindest annähernd ausleuchtende Strahlformungsoptik (4) aufweist, welche so ausgestaltet ist, dass sie von aufeinanderfolgenden Abschnitten der einen Emissionskante der Laserdiode (3) ausgesandte Teilstrahlen parallel zu derselben derart gegeneinander versetzt, dass ihre Projektionen auf eine durch die Emissionskante und die Strahlrichtung aufgespannte Ebene mindestens weitgehend überlappen.

2. Optischer Entfernungsmesser nach Anspruch 1, **dadurch gekennzeichnet, dass** die Strahlformungsoptik (4) ein erstes auf Lichtbeugung oder Lichtbrechung beruhendes Umlenkelement (8) und ein zweites auf Lichtbeugung oder Lichtbrechung beruhendes Umlenkelement (10) umfasst, welche jeweils eine im wesentlichen ebene Oberfläche mit einer Strukturierung aufweisen, wobei die Strukturierung in wenigstens zwei Felder (9a, 9b, 9c, 11a, 11b, 11c) unterteilt ist

3. Optischer Entfernungsmesser nach Anspruch 1 oder 2, **dadurch gekennzeichnet, dass** die Laserdiode (3) mit einer Wellenlänge von zwischen 850 nm und 980 nm sendet.

4. Optischer Entfernungsmesser nach Anspruch 1 oder 2, **dadurch gekennzeichnet, dass** die Laserdiode (3) mit einer Wellenlänge von ca. 1.550 nm sendet.

5. Optischer Entfernungsmesser nach einem der Ansprüche 1 bis 4, **dadurch gekennzeichnet, dass** die Strahlformungsoptik (4) eine unmittelbar auf die Laserdiode (3) folgende Zylinderlinse (7) umfasst, deren Achse zur Emissionskante der Laserdiode (3) parallel ist.

6. Optischer Entfernungsmesser nach Anspruch 5, **dadurch gekennzeichnet, dass** der Durchmesser der Zylinderlinse (7) höchstens 65 µm beträgt.

7. Optischer Entfernungsmesser nach Anspruch 5 oder 6, **dadurch gekennzeichnet, dass** der Abstand zwischen der Emissionskante und der Zylinderlinse (7) höchstens 15 µm beträgt.

8. Optischer Entfernungsmesser nach einem der Ansprüche 2 bis 7, **dadurch gekennzeichnet, dass** das erste Umlenkelement (8) die Teilstrahlen quer zur Emissionskante wie auch parallel zu derselben derart unterschiedlich ablenkt, dass sie im wesentlichen nebeneinander auf das zweite Umlenkelement (10) treffen und das zweite Umlenkelement (10) die Teilstrahlen so ausrichtet, als ob sie jeweils von einer Linie in der Brennebene des Kollimators (1) ausgingen.

9. Optischer Entfernungsmesser nach Anspruch 8, **dadurch gekennzeichnet, dass** die Felder (9a, 9b, 9c) des ersten Umlenkelements (8) parallel zur Emissionskante orientiert sind und unterschiedliche Beugungsstrukturen tragen und die Zahl der Felder (11a, 11b, 11c) des zweiten Umlenkelements (10) der Zahl der Felder (9a, 9b, 9c) des ersten Umlenkelementes (8) entspricht, wobei die Felder (11a, 11b, 11c) des zweiten Umlenkelements (10) unterschiedliche Beugungsstrukturen tragen.

10. Optischer Entfernungsmesser nach einem der Ansprüche 8 bis 9, **dadurch gekennzeichnet, dass** die Strahlformungsoptik (4) einen Block (5) aus transparentem Material aufweist, mit einer ersten Stirnfläche, an welcher das erste Umlenkelement (8) befestigt ist und einer entgegengesetzten zweiten Stirnfläche, an welcher das zweite Umlenkelement (10) befestigt ist.

11. Optischer Entfernungsmesser nach einem der Ansprüche 8 bis 10, **dadurch gekennzeichnet, dass** das erste Umlenkelement (8) und das zweite Umlenkelement (10) aus Kunststoff bestehen.

12. Optischer Entfernungsmesser nach Anspruch 10 oder 11, **dadurch gekennzeichnet, dass** die Zylinderlinse (7) an einer Halterung (6) verankert ist, welche an der ersten Stirnfläche des Blocks (5) befestigt ist.

13. Optischer Entfernungsmesser nach Anspruch 12, **dadurch gekennzeichnet, dass** das erste Umlenkelement (8) mit der Halterung (6) einstückig ist.

14. Optischer Entfernungsmesser nach Anspruch 12 oder 13, **dadurch gekennzeichnet, dass** die Laserdiode (3) mittels einer Lötverbindung am Block (5) befestigt ist.

15. Optischer Entfernungsmesser nach einem der Ansprüche 5 bis 11, **dadurch gekennzeichnet, dass** die Zylinderlinse (7) mit Kitt an der Laserdiode (3) befestigt ist.

16. Optischer Entfernungsmesser nach einem der vorangehenden Ansprüche, **dadurch gekennzeichnet, dass** die Strahlformungsoptik (4) so ausgestaltet ist, dass sich die Teilstrahlen im Fernfeld überlagern.

17. Optischer Entfernungsmesser nach einem der vorangehenden Ansprüche, **dadurch gekennzeichnet, dass** die Strahlformungsoptik (4) so ausgestaltet ist, dass die Teilstrahlen im Fernfeld auf ein nahezu quadratisches Feld abgebildet werden.

## Claims

1. Optical telemeter comprising at least one light source (2) for target illumination and a collimator (1) which collimates the radiation to be emitted by the telemeter before the target illumination, the light source being arranged before the collimator (1) and having a laser diode (3) with an emission edge, and a receiver and a control and evaluation unit, **characterized in that** the light source (2) has a beam-forming optical system (4) which is arranged after the laser diode (3) and at least approximately illuminates the collimator (1) and which is designed so that it offsets rays emitted by successive sections of the emission edge of the laser diode (3) parallel thereto and relative to one another in such a way that their projections onto a plane defined by the emission edge and the beam direction at least substantially overlap.

2. Optical telemeter according to Claim 1, **characterized in that** the beam-forming optical system (4) comprises a first deflection element (8) based on light diffraction or light refraction and a second deflection element (10) based on light diffraction or light refraction, which in each case have a substantially flat surface with structuring, the structuring being divided into at least two fields (9a, 9b, 9c, 11a, 11b, 11c).

3. Optical telemeter according to Claim 1 or 2, **characterized in that** the laser diode (3) emits at a wavelength of between 850 nm and 980 nm.

4. Optical telemeter according to Claim 1 or 2, **characterized in that** the laser diode (3) emits at a wavelength of about 1550 nm.

5. Optical telemeter according to any of Claims 1 to 4, **characterized in that** the beam-forming optical system (4) comprises a cylindrical lens (7) which directly follows the laser diode (3) and whose axis is parallel to the emission edge of the laser diode (3).

6. Optical telemeter according to Claim 5, **characterized in that** the diameter of the cylindrical lens (7) is not more than 65 µm.

7. Optical telemeter according to Claim 5 or 6, **characterized in that** the distance between the emission edge and the cylindrical lens (7) is not more than 15 µm.

8. Optical telemeter according to any of Claims 2 to 7, **characterized in that** the first deflection element (8) deflects the rays transversely to the emission edge as well as parallel thereto differently in such a way that they are incident on the second deflection element (10) substantially side by side, and the second deflection element (10) orients the rays as if they emanated in each case from a line in the focal plane of the collimator (1).

9. Optical telemeter according to Claim 8, **characterized in that** the fields (9a, 9b, 9c) of the first deflection element (8) are oriented parallel to the emission edge and bear different diffraction structures, and the number of fields (11a, 11b, 11c) of the second deflection element (10) corresponds to the number of fields (9a, 9b, 9c) of the first deflection element (8), the fields (11a, 11b, 11c) of the second deflection element (10) bearing different diffraction structures.

10. Optical telemeter according to either of Claims 8 and 9, **characterized in that** the beam-forming optical system (4) has a block (5) of transparent material, comprising a first end face on which the first deflection element (8) is fastened and an opposite second end face on which the second deflection element (10) is fastened.

11. Optical telemeter according to any of Claims 8 to 10, **characterized in that** the first deflection element (8) and the second deflection element (10) consist of plastic.

12. Optical telemeter according to Claim 10 or 11, **characterized in that** the cylindrical lens (7) is anchored on a holder (6) which is fastened to the first end face of the block (5).

13. Optical telemeter according to Claim 12, **characterized in that** the first deflection element (8) is integral with the holder (6).

14. Optical telemeter according to Claim 12 or 13, **characterized in that** the laser diode (3) is fastened to the block (5) by means of a solder joint.

15. Optical telemeter according to any of Claims 5 to 11, **characterized in that** the cylindrical lens (7) is fastened to the laser diode (3) with cement.

16. Optical telemeter according to any of the preceding Claims, **characterized in that** the beam-forming optical system (4) is designed so that the rays are superimposed in the remote field.

17. Optical telemeter according to any of the preceding Claims, **characterized in that** the beam-forming optical system (4) is designed so that the rays are focused onto a virtually square field in the remote field.

## Revendications

1. Télémètre optique (1) comprenant au moins une source lumineuse (2), pour l'illumination de cible, et un collimateur (1), collimatant un rayonnement à émettre depuis le télémètre avant l'éclairement de la cible, la source lumineuse étant disposée en avant du collimateur (1), et présentant une diode laser (3) avec une arête d'émission, ainsi qu'un récepteur et une unité de commande et d'évaluation, **caractérisé en ce que** la source lumineuse (2) présente une optique de formage de rayons, disposée en aval de la diode laser (3), éclairant au moins à peu près le collimateur (1), optique configurée de manière à décaler des rayons partiels, émis par des tronçons successifs d'une arête d'émission de la diode laser (3), parallèlement à ceux-ci, de manière que leurs projections, sur un plan défini par l'arête d'émission et la direction de rayonnement, se chevauchent au moins largement.

2. Télémètre optique selon la revendication 1, **caractérisé en ce que** l'optique de formation de rayons (4) comprend un premier élément déviateur (8), reposant sur la diffraction lumineuse ou la réfraction lumineuse, et un deuxième élément déviateur (10), reposant sur la diffraction lumineuse ou sur la réfraction lumineuse, présentant chacun une surface sensiblement plane, munie d'une structuration, la structuration étant divisée en au moins deux champs (9a, 9b, 9c, 11a, 11b, 11c).

3. Télémètre optique selon la revendication 1 ou 2, **caractérisé en ce que** la diode laser (3) émet à une longueur d'onde comprise entre 850 nm et 980 nm.

4. Télémètre optique selon la revendication 1 ou 2, **caractérisé en ce que** la diode laser (3) émet à une longueur d'onde d'environ 1.550 nm.

5. Télémètre optique selon l'une des revendications 1 à 4, **caractérisé en ce que** l'optique de formation de rayons (4) comprend une lentille cylindrique (7), faisant directement suite à la diode laser (3) et dont l'axe est parallèle à l'arête d'émission de la diode laser (3).

6. Télémètre optique selon la revendication 5, **caractérisé en ce que** le diamètre de la lentille cylindre (7) est au maximum de 65 µm.

7. Télémètre optique selon la revendication 5 ou 6, **caractérisé en ce que** l'espacement, entre l'arête d'émission et la lentille cylindrique (7), est au maximum de 15 µm.

8. Télémètre optique selon l'une des revendications 2 à 7, **caractérisé en ce que** le premier élément déviateur (8) dévie les rayons partiels transversalement par rapport à l'arête d'émission, ainsi qu'également parallèlement à ceux-ci, de manière qu'ils touchent sensiblement les uns à côté des autres le deuxième élément déviateur (10), et le deuxième élément déviateur (10) oriente les rayons partiels comme s'ils sortaient chaque fois d'une ligne située dans le plan focal du collimateur (1).

9. Télémètre optique selon la revendication 8, **caractérisé en ce que** les champs (9a, 9b, 9c) du premier élément déviateur (8) sont orientés parallèlement à l'arête d'émission et portent des structures de diffraction différentes, et le nombre de champs (11a, 11b, 11c) du deuxième élément déviateur (10) correspond au nombre des champs (9a, 9b, 9c) du premier élément déviateur (8), les champs (11a, 11b, 11c) du deuxième élément déviateur (10) portant des structures de diffraction différentes.

10. Télémètre optique selon l'une des revendications 8 à 9, **caractérisé en ce que** l'optique de formation de rayons (4) présente un bloc (5) formé d'un matériau transparent, avec une première face frontale, sur laquelle est fixé le premier élément déviateur (8), et une deuxième face frontale opposée, sur laquelle est fixé le deuxième élément déviateur (10).

11. Télémètre optique selon l'une des revendications 8 à 10, **caractérisé en ce que** le premier élément déviateur (8) et le deuxième déviateur (10) sont formés de matière synthétique.

12. Télémètre optique selon la revendication 10 ou 11, **caractérisé en ce que** la lentille cylindrique (8) est ancrée sur une fixation (6) fixée sur la première face frontale du bloc (5).

13. Télémètre optique selon la revendication 12, **caractérisé en ce que** le premier élément déviateur (8) est réalisé d'une seule pièce avec la fixation (6).

14. Télémètre optique selon la revendication 12 ou 13, **caractérisé en ce que** la diode laser (3) est fixée sur le bloc (5) au moyen d'une liaison brasée.

15. Télémètre optique selon l'une des revendications 5 à 11, **caractérisé en ce que** la lentille cylindrique (7) est fixée sur la diode laser (3) par du mastic.

16. Télémètre optique selon l'une des revendications précédentes, **caractérisé en ce que** l'optique de formation de rayons (4) est conformée de manière que les rayons partiels se superposent dans le champ distant.

17. Télémètre optique selon l'une des revendications précédentes, **caractérisé en ce que** l'optique de formation de rayons (4) est réalisée de manière que, dans le champ distant, les rayons partiels soient imagés sur un champ à peu près carré.
